# EUROPEAN PATENT SPECIFICATION

(11) **EP 2 096 225 B1**
(45) Date of publication and mention of the grant of the patent: **06.04.2016**
(21) Application number: 08003669.2
(22) Date of filing: 28.02.2008
(51) Int. Cl.: E04D 5/10, C09D 5/38

(54) **Synthetic waterproofing covering, particularly for roofs, and method for manufacturing**
Wasserfeste Kunststoffabdeckung, insbesondere für Dächer, und Herstellungsverfahren
Revêtement imperméable synthétique, particulièrement pour toitures, et procédé de fabrication

(43) Date of publication of application: 02.09.2009
(73) Proprietor: Flag S.p.A, 24040 Chignolo D'Isola (BG) (IT)
(72) Inventor: Fossen, Claudio, 24040 Chignolo d'Isola (Bergamo) (IT)
(74) Representative: Modiano, Micaela Nadia

(56) References cited:
- WO-A-02/18133
- WO-A-2007/078903
- DE-A1- 10 001 573
- DE-A1- 19 824 058
- GB-A- 824 974
- US-A1- 2002 098 110
- US-A1- 2004 258 835

## Description

The present invention relates to a synthetic waterproofing covering, particularly for providing roofings for civil, industrial or commercial buildings, and to a method for producing it.

As is known, roofings for civil buildings are generally provided by means of tiles, having various shapes and colors, which are particularly appreciated for their aesthetic effect. In some cases, roofings made of metal plates, generally made of copper or copper alloys, are also used.

Roofings for industrial or commercial buildings are constituted generally by metal plates, generally made of copper or copper alloys or aluminum or aluminum alloys.

In recent years, waterproofing coverings made of synthetic material, studied specifically to provide roofings of buildings, have become commercially established.

Roofings made of metal plates offer excellent assurances of waterproofing and achieve a good result from an aesthetic point of view. However, in view of the need to have metal plates with relatively large dimensions in order to reduce the number of joints to be provided and accordingly reduce the installation times, the dimensions of such plates cannot exceed specific limits set by storage and transport requirements and by the need to handle them during installation.

Furthermore, metal plates can be adapted to surfaces to be covered which have a complex shape only by resorting to many cuts and joints to shape them adequately.

Waterproofing coverings made of synthetic material, by virtue of the possibility to be packaged in rolls, can be considerably larger than metal plates, and this simplifies unquestionably their storage and transport and makes their installation considerably simpler and quicker. Furthermore, the deformability of these waterproofing coverings allows to cover even surfaces which have a complex shape without resorting to many cuts and joints.

However, the aesthetic appearance of roofings provided by means of waterproofing coverings made of synthetic material is significantly less appreciated than that of roofings made of metal plates.

In order to improve the aesthetic appearance of waterproofing coverings, pigments are used which are introduced in the synthetic material during the production of the covering, so as to obtain a color which closely resembles the color of coverings made of metal plates.

However, the results achieved so far have not been entirely satisfactory, since the coloring of waterproofing coverings made of synthetic material obtained with the pigments used up to now remains substantially stable over time, differently from the coloring of coverings roofings made of metal plates, particularly copper, which varies over time. This substantial unchangeability or lack of aging of roofings provided by means of waterproofing coverings made of synthetic material gives these roofings a cold appearance, which is scarcely appreciated and is all the more evident when such roofings are arranged next to roofings made of metal plates.

For this reason, the use of waterproofing coverings made of synthetic material in the provision of roofings up to now has been limited to the field of roofings for industrial or commercial buildings, preferably located away from residential areas or from buildings with roofings provided by means of metal plates.

GB 824974 discloses a covering for roofing that comprises a layer of synthetic material which however is constituted by a mix of PVC and tar , preferably hard coal tar.

WO 02/18133 discloses a covering having reduced infrared radiation emission and this is obtained by applying a fluoropolymer layer to which metal particles are added just in order to improve the IR radiation absorption.

The aim of the present invention is to solve the problems described above by providing a synthetic waterproofing covering particularly for providing roofings for civil, industrial or commercial buildings which ensures an aesthetic result which can be compared to the result that can be achieved by using metal plates.

Within this aim, an object of the invention is to provide a synthetic waterproofing covering whose coloring varies over time, allowing to provide roofings with the aesthetic aging effect typical of roofings made of metal plates.

Another object of the invention is to provide a waterproofing covering in which the color changing times are similar to those of metal plates.

Another object of the invention is to provide a synthetic waterproofing covering which can combine the advantages, in terms of storage, transport and installation, which are typical of waterproofing coverings made of synthetic material with the aesthetic qualities of metal plates.

Another object of the invention is to provide a synthetic waterproofing covering which, by virtue of its aesthetic characteristics, can be used without problems also to provide roofings of civil buildings placed even in a historical urban context even in the vicinity of roofings provided by means of metal plates, particularly copper or copper alloys.

Another object of the invention is to provide a synthetic waterproofing covering which can be manufactured at competitive costs.

Another object is to propose a method for manufacturing the waterproofing covering according to the invention.

This aim and these and other objects, which will become better apparent hereinafter, are achieved by a synthetic waterproofing covering, particularly for providing roofings for civil, industrial or commercial buildings, as defined in claim 1.

Further characteristics and advantages of the invention will become better apparent from the description of a preferred but not exclusive embodiment of the waterproofing covering according to the invention and of the method for manufacturing it, illustrated by way of non-limiting example in the accompanying drawings, wherein:

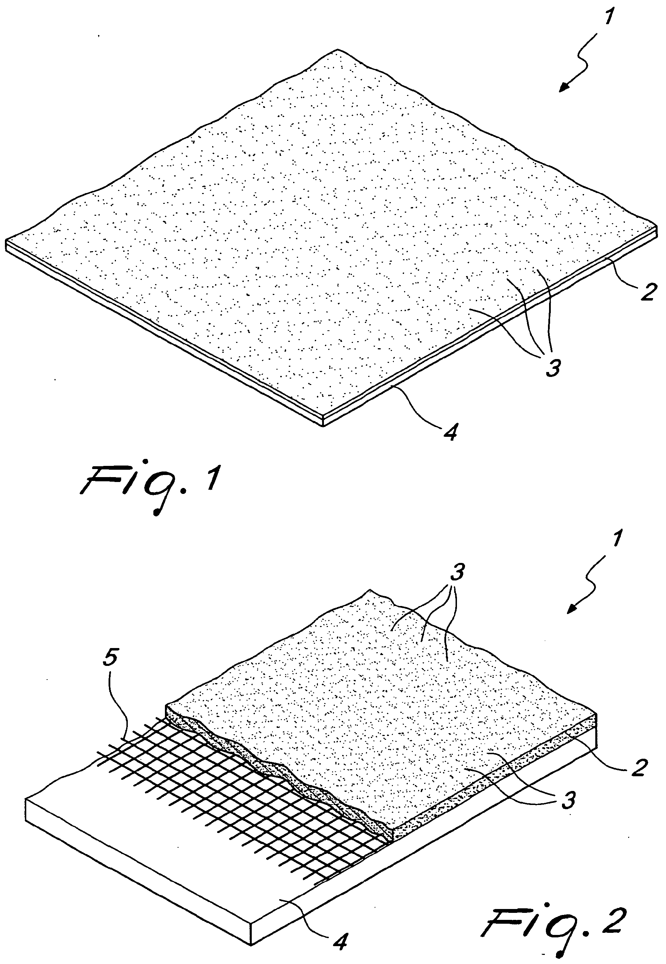

Figure 1 is a view of a portion of a waterproofing covering according to the invention;
Figure 2 is an enlarged-scale and partially cutout view of a portion of a waterproofing covering according to the invention.

With reference to the figures, the waterproofing covering according to the invention comprises a plate-like body, generally designated by the reference numeral 1, which is impermeable to water and is composed of at least one layer 2 made of synthetic material, which is meant to be exposed to the atmosphere.

Depending on the requirements, the plate-like body 1, in addition to the layer 2, which constitutes the layer designed to be exposed to the atmosphere, can be composed of multiple superimposed layers 4 made of different materials, one or more of which can also be made of fabric, non-woven fabric or the like made of natural or synthetic material. Optionally, inside one or more of these layers, or between two contiguous layers, it is possible to arrange a reinforcement, such as for example a net 5, or fibers, in a per se known manner, in order to increase the strength of the plate-like body 1.

The plate-like body 1, as a whole, as a consequence of the material of which the various layers that compose it are made and of the overlap of the various layers, is impermeable to water and flexible, in a manner similar to known types of waterproofing coverings for providing roofings.

According to the invention, the layer 2 contains metallic pigments 3 which are visible from the side of this layer 2 designed to be exposed to the atmosphere and can interact with the atmosphere by varying their coloring as a consequence of oxidation or chemical reactions in general.

The synthetic material of which the layer 2 is made is at least partially transparent and permeable to air and the metallic pigments 3 are dispersed within the mass of the layer 2. By virtue of the air-permeability of the layer 2, the pigments 3, despite being dispersed within the mass of the layer 2, are still able to interact with the atmosphere, oxidizing or otherwise undergoing the chemical reactions that cause the aging of metals.

The metallic pigments can be based on copper or copper alloys or based on aluminum or aluminum alloys, i.e., the two metals and their alloys that are usually used to provide roofings with metal plates, so that the covering according to the invention can simulate, with excellent results, roofings provided by means of metal plates.

Preferably, the metallic pigments 3 are based on an alloy of copper and zinc which is composed of copper in a percentage comprised substantially between 70% and 90% and zinc in a percentage comprised substantially between 10% and 30%.

As metallic pigments 3, based on a copper-zinc alloy, preference is given to the use of metallic pigments which are already used to produce paints and are composed of a metal core which, by means of a technique derived from the sol-gel technique, are coated with a transparent and homogeneous layer of silicate (SiO₂). This layer of silicate (SiO₂) increases the stability of the color of the metallic core, which proves itself particularly useful during the process for "baking" the synthetic material with the corresponding additives, which constitutes the layer 2, and furthermore slows the process of oxidation of the metallic core, reproducing the natural color variation of copper plates. Purely by way of example, it is possible to use as metallic pigments based on a copper-zinc alloy for example the pigments known commercially under the trademark "DOROLAN", manufactured by Eckart GmbH & Co. KG, Kaiserstrasse 30, D-90763 Furth (Germany), which are available in a wide range of colors which vary from greenish gold to reddish brown.

As metallic pigments 3 based on aluminum or aluminum alloy, preference is given to the use of metallic pigments currently used in the field of the production of various types of metalized paper. These metallic pigments are formed by metallic laminas/flakes of at least 99.5% pure aluminum, produced by means of a process for wet or dry milling, in which the atomized powder of aluminum is deformed and broken down, forming flakes which are then sorted and further refined. This process increases the glittering effect of the metal, allowing to obtain special effects and increasing protection against heat and anticorrosion properties.

Merely by way of indication, it is possible to use as aluminum-based metallic pigments for example the pigments known commercially under the trademark "STANDART", such as Lac NTC or the like, manufactured by Eckart GmbH & Co. KG, Kaiserstrasse 30, D-90763 Furth (Germany).

The synthetic material of which the layer 2 is made is constituted by a particular type of polyvinyl chloride (PVC) capable of enhancing to the maximum extent the characteristics of brilliance and the other aesthetic effects of the metallic pigments 3 that are used, and of ensuring the necessary thermal stability of the polymeric matrix, which otherwise would be destabilized by the presence of the metallic pigments 3. This particular type of polyvinyl chloride (PVC) is constituted by a polyvinyl chloride homopolymer of the ultrafine type, which is obtained by means of a specific polymerization process which allows to obtain a particularly narrow particle size distribution curve (lower than 10 microns). Purely by way of example, said polyvinyl chloride (PVC) can be constituted by the product known commercially by the trademark "PEVIKON" P 1510, manufactured by Hydro Polymers, Drammensveien 134, N-0240 Oslo (Norway).

The polyvinyl chloride (PVC) that constitutes the layer 2 is supplied with additives in order to increase its resistance to the degradation caused by ultraviolet and infrared radiation during exposure to the atmosphere. In waterproofing coverings of the known type, this goal is achieved by introducing in the polyvinyl chloride (PVC), in addition to the ordinary additives (UV adsorbers and antioxidizers), generally inorganic pigments, which provide a shield against the cited radiation and prevent degradation of the polymer. In the layer 2 of the waterproofing covering according to the invention, these pigments would eliminate the metallescent effect that is being sought.

For this reason, a particular additive is introduced in the layer 2 of the waterproofing covering according to the invention; said additive is known in the field of paints and is constituted by titanium dioxide (TiO₂) subjected to microrutile technology (Nanotec Plant), so as to obtain an extremely fine primary powder of crystallite, which is suitably dispersed in order to avoid the forming of agglomerated particles. The final additive is composed of particles with a core constituted by titanium dioxide (TiO₂) coated by an inorganic protection and then by an organic one. This additive can be provided in the form of a paste, which can be dispersed easily during the process for mixing in the mass of the polymer together with all the other additives.

The polyvinyl chloride (PVC), by means of this additive, remains in any case transparent, allowing to view the metallic pigments 3 through its exposed side, and has a good resistance to the degradation action of ultraviolet and infrared radiation.

The waterproofing covering according to the invention can be provided by spreading or by extrusion or by calendering, producing at least one layer 2 made of synthetic material, particularly a polymer constituted by polyvinyl chloride (PVC), as described above. During the production of the layer 2, the metallic pigments are dispersed in the liquid or semiliquid mass of the polymer that constitutes the layer 2 before spreading it or extruding it or calendering it.

The waterproofing covering according to the invention, in the provision of roofings for civil, industrial or commercial buildings, can be applied in a manner similar to known types of synthetic waterproofing coverings, with all the advantages that they offer with respect to the use of metal plates.

Just after being applied, the roofing provided by means of a covering according to the invention has the appearance of a roofing provided by means of metal plates. As time goes by, the metallic pigments 3, due to oxidation or chemical reactions that occur as a consequence of the contact of the metallic pigments with the atmosphere, gradually change color, simulating the color changes of roofings made of metal plates.

In practice it has been found that the waterproofing covering according to the invention fully achieves the intended aim and objects, since it allows to provide roofings with an aesthetic result which can be compared to the result that can be achieved by using metal plates, maintaining all the advantages, in terms of costs and simplicity of storage, transport and installation, of waterproofing coverings made of synthetic material.

In the examples of embodiment described above, individual characteristics, given in relation to specific examples, may actually be interchanged with other different characteristics that exist in other examples of embodiment. Moreover, it is noted that anything found to be already known during the patenting process is understood not to be claimed and to be the subject of a disclaimer.

The waterproofing covering and method for manufacturing it thus conceived are susceptible of numerous modifications and variations, all of which are within the scope of the inventive concept. All the details may furthermore be replaced with other technically equivalent elements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A synthetic waterproofing covering, particularly for providing roofings for civil, industrial or commercial buildings, comprising a plate-like body which is impermeable to water and is composed of at least one layer of synthetic material, designed to be exposed to the atmosphere, **characterized in that** said at least one layer of synthetic material is constituted by polyvinyl chloride that contains metallic pigments which are visible from the side of said at least one layer that is designed to be exposed to the atmosphere and can interact with the atmosphere, varying their coloring as a consequence of oxidation or chemical reactions in general, said polyvinyl chloride containing at least one additive for shielding from ultraviolet and infrared radiation, said shielding additive being a nano-additive constituted by titanium dioxide subjected to microrutile technology.

2. The waterproofing covering according to claim 1, **characterized in that** said plate-like body is flexible.

3. The waterproofing covering according to one or more of the preceding claims, **characterized in that** said at least one layer is at least partially transparent and permeable to air, said metallic pigments being dispersed within the mass of said at least one layer.

4. The waterproofing covering according to one or more of the preceding claims, **characterized in that** said metallic pigments are based on copper or a copper alloy.

5. The waterproofing covering according to one or more of the preceding claims, **characterized in that** said metallic pigments are based on a copper-zinc alloy.

6. The waterproofing covering according to claim 5, **characterized in that** said copper-zinc alloy is composed of copper in a percentage comprised substantially between 70% and 90% and zinc in a percentage comprised substantially between 10% and 30%.

7. The waterproofing covering according to one or more of the preceding claims, **characterized in that** said metallic pigments are composed of a metallic core coated by a transparent protective layer.

8. The waterproofing covering according to claim 7, **characterized in that** said transparent protective layer is constituted by silicate (SiO₂).

9. The waterproofing covering according to one or more of claims 1-3 **characterized in that** said metallic pigments are based on aluminum or an aluminum alloy.

10. The waterproofing covering according to one or more of the preceding claims, **characterized in that** said polyvinyl chloride is a polyvinyl chloride (PVC) homopolymer of the ultrafine type, with a particle size distribution curve lower than 10 microns.

11. The waterproofing covering according to one or more of the preceding claims, **characterized in that** said plate-like body is composed of at least two superimposed layers.

12. The waterproofing covering according to one or more of the preceding claims, **characterized in that** a reinforcement is arranged within said plate-like body.

13. A method for manufacturing a synthetic waterproofing covering, particularly for providing roofings for civil, industrial or commercial buildings, comprising a step for producing a plate-like body made of waterproof synthetic material which is composed of at least one layer made of synthetic material meant to be exposed to the atmosphere, **characterized in that** said at least one layer made of polyvinyl chloride and **in that** metallic pigments are dispersed in the mass of synthetic material of said at least one layer and are visible from the side of said at least one layer which is meant to be exposed to the atmosphere and can interact with the atmosphere by varying their color as a consequence of oxidation or chemical reactions in general, said polyvinyl chloride receiving the addition of at least once additive for shielding against ultraviolet and infrared radiation, said shielding additive being a nano-additive constituted by titanium dioxide subjected to microrutile technology.

14. The method according to claim 13, **characterized in that** said at least one layer is at least partially transparent and permeable to air, said metallic pigments being dispersed within the mass of said at least one layer.

15. The method according to one or more of the preceding claims, **characterized in that** said plate-like body is produced by spreading, said metallic pigments being dispersed within the mass of said at least one layer before spreading it.

16. The method according to one or more of the preceding claims, **characterized in that** said plate-like body is produced by extrusion, said metallic pigments being dispersed within the mass of said at least one layer before its extrusion.

17. The method according to one or more of the preceding claims, **characterized in that** said plate-like body is produced by calendering, said metallic pigments being dispersed within the mass of the polymer of said at least one layer before its calendering.

18. The method according to one or more of the preceding claims, **characterized in that** said metallic pigments are based on copper or a copper alloy.

19. The method according to one or more of claims 13-17, **characterized in that** said metallic pigments are based on a copper-zinc alloy.

20. The method according to claim 19, **characterized in that** said copper-zinc alloy is composed of copper in a percentage comprised substantially between 70% and 90% and zinc in a percentage comprised substantially between 10% and 30%.

21. The method according to one or more of the preceding claims, **characterized in that** said metallic pigments are composed of a metallic core coated by a transparent protective layer.

22. The method according to claim 21, **characterized in that** said transparent protective layer is constituted by silicate (SiO₂).

23. The method according to one or more of the preceding claim, **characterized in that** said metallic pigments are based on aluminum or an aluminum alloy.

24. The method according to one or more of claims 13-17, **characterized in that** said polyvinyl chloride is a polyvinyl chloride (PVC) homopolymer of the ultrafine type, with a particle size distribution curve lower than 10 microns.

25. The method according to one or more of the preceding claims, **characterized in that** said plate-like body is provided by superimposing at least two layers.

26. The method according to one or more of the preceding claims, **characterized in that** a reinforcement is arranged within said plate-like body.

## Patentansprüche

1. Eine synthetische wasserfeste Abdeckung, insbesondere zur Bereitstellung von Dächern für Zivil-, Industrie- oder kommerzielle Gebäude, die einen plattenähnlichen Körper umfasst, der wasserundurchlässig ist und aus mindestens einer Schicht von synthetischem Material besteht, das dazu bestimmt ist, der Atmosphäre ausgesetzt zu sein, **dadurch gekennzeichnet, dass** die mindestens eine Schicht von synthetischem Material aus Polyvinylchlorid besteht, das metallische Pigmente enthält, die von der Seite der mindestens einen Schicht sichtbar sind, welche dazu bestimmt ist, der Atmosphäre ausgesetzt zu sein, und mit der Atmosphäre interagieren kann, wobei ihre Färbung infolge von Oxidation oder chemischen Reaktionen im Allgemeinen variiert, wobei das Polyvinylchlorid mindestens einen Zusatzstoff zur Abschirmung gegenüber ultravioletter und infraroter Strahlung enthält, wobei der Abschirm-Zusatzstoff ein Nano-Zusatzstoff ist, der aus Titandioxid besteht, mit Mikrorutil-Technologie behandelt.

2. Die wasserfeste Abdeckung gemäß Anspruch 1, **dadurch gekennzeichnet, dass** der plattenähnliche Körper biegsam ist.

3. Die wasserfeste Abdeckung gemäß einem oder mehreren der obigen Ansprüche, **dadurch gekennzeichnet, dass** die mindestens eine Schicht zumindest teilweise transparent und luftdurchlässig ist, wobei die metallischen Pigmente in der Masse der mindestens einen Schicht dispergiert sind.

4. Die wasserfeste Abdeckung gemäß einem oder mehreren der obigen Ansprüche, **dadurch gekennzeichnet, dass** die metallischen Pigmente auf Kupfer oder einer Kupferlegierung basieren.

5. Die wasserfeste Abdeckung gemäß einem oder mehreren der obigen Ansprüche, **dadurch gekennzeichnet, dass** die metallischen Pigmente auf einer Kupfer-Zink-Legierung basieren.

6. Die wasserfeste Abdeckung gemäß Anspruch 5, **dadurch gekennzeichnet, dass** die Kupfer-Zink-Legierung aus Kupfer in einem Prozentsatz, der im Wesentlichen zwischen 70% und 90% liegt, und Zink in einem Prozentsatz, der im Wesentlichen zwischen 10% und 30% liegt, besteht.

7. Die wasserfeste Abdeckung gemäß einem oder mehreren der obigen Ansprüche, **dadurch gekennzeichnet, dass** die metallischen Pigmente aus einem Metallkern bestehen, der mit einer transparenten Schutzschicht beschichtet ist.

8. Die wasserfeste Abdeckung gemäß Anspruch 7, **dadurch gekennzeichnet, dass** die transparente Schutzschicht aus Silikat (SiO₂) besteht.

9. Die wasserfeste Abdeckung gemäß einem oder mehreren der Ansprüche 1-3, **dadurch gekennzeichnet, dass** die metallischen Pigmente auf Aluminium oder einer Aluminiumlegierung basieren.

10. Die wasserfeste Abdeckung gemäß einem oder mehreren der obigen Ansprüche, **dadurch gekennzeichnet, dass** das Polyvinylchlorid ein Polyvinylchlorid (PVC)-Homopolymer vom ultrafeinen Typ mit einer Partikelgrößen-Verteilungskurve unter 10 Mikron ist.

11. Die wasserfeste Abdeckung gemäß einem oder mehreren der obigen Ansprüche, **dadurch gekennzeichnet, dass** der plattenähnliche Körper aus mindestens zwei übereinander angeordneten Schichten besteht.

12. Die wasserfeste Abdeckung gemäß einem oder mehreren der obigen Ansprüche, **dadurch gekennzeichnet, dass** eine Verstärkung in dem plattenähnlichen Körper angeordnet ist.

13. Ein Verfahren zur Herstellung einer synthetischen wasserfesten Abdeckung, insbesondere zur Bereitstellung von Dächern für Zivil-, Industrie- oder kommerzielle Gebäude, das einen Schritt zur Herstellung eines plattenähnlichen Körpers aus wasserfestem synthetischem Material umfasst, das aus mindestens einer Schicht besteht, die aus synthetischem Material besteht, das dazu bestimmt ist, der Atmosphäre ausgesetzt zu werden, **dadurch gekennzeichnet, dass** die mindestens eine Schicht aus Polyvinylchlorid gemacht ist und dadurch, dass metallische Pigmente in der Masse von synthetischem Material dieser mindestens einen Schicht dispergiert sind und von der Seite der mindestens einen Schicht sichtbar sind, die dazu bestimmt ist, der Atmosphäre ausgesetzt zu sein, und mit der Atmosphäre interagieren können, indem sie ihre Farbe infolge von Oxidation oder chemischen Reaktionen im Allgemeinen variieren, wobei das Polyvinylchlorid die Zugabe mindestens eines Zusatzstoffs zur Abschirmung gegenüber ultravioletter und infraroter Strahlung erfährt, wobei der Abschirm-Zusatzstoff ein Nano-Zusatzstoff ist, der aus Titandioxid besteht und mit Mikrorutil-Technologie behandelt ist.

14. Das Verfahren gemäß Anspruch 13, **dadurch gekennzeichnet, dass** die mindestens eine Schicht zumindest teilweise transparent und luftdurchlässig ist, wobei die metallischen Pigmente in der Masse der mindestens einen Schicht dispergiert sind.

15. Das Verfahren gemäß einem oder mehreren der obigen Ansprüche, **dadurch gekennzeichnet, dass** der plattenähnliche Körper durch Ausstreichen hergestellt wird, wobei die metallischen Pigmente in der Masse der mindestens einen Schicht dispergiert werden, bevor sie aufgestrichen wird.

16. Das Verfahren gemäß einem oder mehreren der obigen Ansprüche, **dadurch gekennzeichnet, dass** der plattenähnliche Körper durch Extrusion hergestellt wird, wobei die metallischen Pigmente in der Masse der mindestens einen Schicht vor ihrer Extrusion dispergiert werden.

17. Das Verfahren gemäß einem oder mehreren der obigen Ansprüche, **dadurch gekennzeichnet, dass** der plattenähnliche Körper durch Kalandrieren hergestellt wird, wobei die metallischen Pigmente in der Polymermasse der mindestens einen Schicht vor ihrem Kalandrieren dispergiert werden.

18. Das Verfahren gemäß einem oder mehreren der obigen Ansprüche, **dadurch gekennzeichnet, dass** die metallischen Pigmente auf Kupfer oder einer Kupferlegierung basieren.

19. Das Verfahren gemäß einem oder mehreren der Ansprüche 13-17, **dadurch gekennzeichnet, dass** die metallischen Pigmente auf einer Kupfer-Zink-Legierung basieren.

20. Das Verfahren gemäß Anspruch 19, **dadurch gekennzeichnet, dass** die Kupfer-Zink-Legierung aus Kupfer in einem Prozentsatz, der im Wesentlichen zwischen 70% und 90% liegt, und Zink in einem Prozentsatz, der im Wesentlichen zwischen 10% und 30% liegt, besteht.

21. Das Verfahren gemäß einem oder mehreren der obigen Ansprüche, **dadurch gekennzeichnet, dass** die metallischen Pigmente aus einem metallischen Kern bestehen, der mit einer transparenten Schutzschicht beschichtet ist.

22. Das Verfahren gemäß Anspruch 21, **dadurch gekennzeichnet, dass** die transparente Schutzschicht aus Silikat (SiO₂) besteht.

23. Das Verfahren gemäß einem oder mehreren der obigen Ansprüche, **dadurch gekennzeichnet, dass** die metallischen Pigmente auf Aluminium oder einer Aluminiumlegierung basieren.

24. Das Verfahren gemäß einem oder mehreren der Ansprüche 13-17, **dadurch gekennzeichnet, dass** das Polyvinylchlorid ein Polyvinylchlorid (PVC)-Homopolymer vom ultrafeinen Typ mit einer Partikelgrößen-Verteilungskurve unter 10 Mikron ist.

25. Das Verfahren gemäß einem oder mehreren der obigen Ansprüche, **dadurch gekennzeichnet, dass** der plattenähnliche Körper durch das Übereinanderlegen mindestens zweier Schichten bereitgestellt wird.

26. Das Verfahren gemäß einem oder mehreren der obigen Ansprüche, **dadurch gekennzeichnet, dass** eine Verstärkung in dem plattenähnlichen Körper angeordnet ist.

## Revendications

1. Revêtement imperméable synthétique, particulièrement destiné aux toitures pour les bâtiments civils, industriels ou commerciaux, comprenant un corps en forme de plaque qui est imperméable à l'eau et qui est composé d'au moins une couche de matériau synthétique, conçue pour être exposée à l'atmosphère, **caractérisé en ce que** ladite au moins une couche de matériau synthétique est constituée de chlorure de polyvinyle qui contient des pigments métalliques qui sont visibles du côté de ladite au moins une couche qui est conçue pour être exposée à l'atmosphère et qui peuvent interagir avec l'atmosphère, en changeant de couleur suite à l'oxydation ou aux réactions chimiques en général, ledit chlorure de polyvinyle contenant au moins un additif offrant une protection contre les rayonnements ultraviolet et infrarouge, ledit additif de protection étant un nano-additif constitué de dioxyde de titane soumis à la technologie microrutile.

2. Revêtement imperméable selon la revendication 1, **caractérisé en ce que** ledit corps en forme de plaque est flexible.

3. Revêtement imperméable selon une ou plusieurs des revendications précédentes, **caractérisé en ce que** ladite au moins une couche est au moins partiellement transparente et perméable à l'air, lesdits pigments métalliques étant dispersés dans la masse de ladite au moins une couche.

4. Revêtement imperméable selon une ou plusieurs des revendications précédentes, **caractérisé en ce que** lesdits pigments métalliques sont à base de cuivre ou d'un alliage de cuivre.

5. Revêtement imperméable selon une ou plusieurs des revendications précédentes, **caractérisé en ce que** lesdits pigments métalliques sont à base d'un alliage cuivre-zinc.

6. Revêtement imperméable selon la revendication 5, **caractérisé en ce que** ledit alliage cuivre-zinc est composé de cuivre en un pourcentage compris sensiblement entre 70 % et 90 % et de zinc en un pourcentage compris sensiblement entre 10 % et 30 %.

7. Revêtement imperméable selon une ou plusieurs des revendications précédentes, **caractérisé en ce que** lesdits pigments métalliques sont composés d'un coeur métallique revêtu d'une couche protectrice transparente.

8. Revêtement imperméable selon la revendication 7, **caractérisé en ce que** ladite couche protectrice transparente est constituée de silicate (SiO₂).

9. Revêtement imperméable selon une ou plusieurs des revendications 1 à 3, **caractérisé en ce que** lesdits pigments métalliques sont à base d'aluminium ou d'un alliage à base d'aluminium.

10. Revêtement imperméable selon une ou plusieurs des revendications précédentes, **caractérisé en ce que** ledit chlorure de polyvinyle est un homopolymère de chlorure de polyvinyle (PVC) du type ultrafin, ayant une courbe de distribution granulométrique inférieure à 10 microns.

11. Revêtement imperméable selon une ou plusieurs des revendications précédentes, **caractérisé en ce que** ledit corps en forme de plaque est composé d'au moins deux couches superposées.

12. Revêtement imperméable selon une ou plusieurs des revendications précédentes, **caractérisé en ce qu'**un renfort est agencé à l'intérieur dudit corps en forme de plaque.

13. Procédé de fabrication d'un revêtement imperméable synthétique, particulièrement destiné aux toitures pour les bâtiments civils, industriels ou commerciaux, comprenant une étape de production d'un corps en forme de plaque fabriqué à partir d'un matériau synthétique imperméable qui est composé d'au moins une couche fabriquée en un matériau synthétique conçue pour être exposée à l'atmosphère, **caractérisé en ce que** ladite au moins une couche est fabriquée en chlorure de polyvinyle et **en ce que** les pigments métalliques sont dispersés dans la masse de matériau synthétique de ladite au moins une couche et sont visibles du côté de ladite au moins une couche qui est conçue pour être exposée à l'atmosphère et qui peuvent interagir avec l'atmosphère en changeant de couleur suite à l'oxydation ou aux réactions chimiques en général, ledit chlorure de polyvinyle bénéficiant de l'addition d'au moins un additif offrant une protection contre les rayonnements ultraviolet et infrarouge, ledit additif de protection étant un nano-additif constitué de dioxyde de titane soumis à la technologie microrutile.

14. Procédé selon la revendication 13, **caractérisé en ce que** ladite au moins une couche est au moins partiellement transparente et perméable à l'air, lesdits pigments métalliques étant dispersés dans la masse de ladite au moins une couche.

15. Procédé selon une ou plusieurs des revendications précédentes, **caractérisé en ce que** ledit corps en forme de plaque est produit par étalement, lesdits pigments métalliques étant dispersés dans la masse de ladite au moins une couche avant son étalement.

16. Procédé selon une ou plusieurs des revendications précédentes, **caractérisé en ce que** ledit corps en forme de plaque est produit par extrusion, lesdits pigments métalliques étant dispersés dans la masse de ladite au moins une couche avant son extrusion.

17. Procédé selon une ou plusieurs des revendications précédentes, **caractérisé en ce que** ledit corps en forme de plaque est produit par calandrage, lesdits pigments métalliques étant dispersés dans la masse du polymère de ladite au moins une couche avant son calandrage.

18. Procédé selon une ou plusieurs des revendications précédentes, **caractérisé en ce que** lesdits pigments métalliques sont à base de cuivre ou d'un alliage à base de cuivre.

19. Procédé selon une ou plusieurs des revendications 13 à 17, **caractérisé en ce que** lesdits pigments métalliques sont à base d'un alliage cuivre-zinc.

20. Procédé selon la revendication 19, **caractérisé en ce que** ledit alliage cuivre-zinc est composé de cuivre en un pourcentage compris sensiblement entre 70 % et 90 % et de zinc en un pourcentage compris sensiblement entre 10 % et 30 %.

21. Procédé selon une ou plusieurs des revendications précédentes, **caractérisé en ce que** lesdits pigments métalliques sont composés d'un coeur métallique revêtu d'une couche protectrice transparente.

22. Procédé selon la revendication 21, **caractérisé en ce que** ladite couche protectrice transparente est constituée de silicate (SiO₂).

23. Procédé selon une ou plusieurs des revendications précédentes, **caractérisé en ce que** lesdits pigments métalliques sont à base d'aluminium ou d'un alliage à base d'aluminium.

24. Procédé selon une ou plusieurs des revendications 13 à 17, **caractérisé en ce que** ledit chlorure de polyvinyle est un homopolymère de chlorure de polyvinyle (PVC) du type ultrafin, ayant une courbe de distribution granulométrique inférieure à 10 microns.

25. Procédé selon une ou plusieurs des revendications précédentes, **caractérisé en ce que** ledit corps en forme de plaque est obtenu en superposant au moins deux couches.

26. Procédé selon une ou plusieurs des revendications précédentes, **caractérisé en ce qu'**un renfort est agencé à l'intérieur dudit corps en forme de plaque.
